# EUROPEAN PATENT APPLICATION

(11) **EP 4 654 339 A1**
(43) Date of publication of application: **26.11.2025**
(21) Application number: 24922680.4
(22) Date of filing: 26.11.2024
(51) Int. Cl.: H01M 10/658, H01M 10/6555, H01M 10/653, H01M 10/625, H01M 50/204, H01M 50/249

(54) **BATTERY MODULE, AND BATTERY PACK AND VEHICLE COMPRISING SAME**

(30) Priority: 15.03.2024 KR 20240036813
(71) Applicant: LG Energy Solution Ltd., Seoul 07335 (KR)
(72) Inventor: The designation of the inventor has not yet been filed
(74) Representative: BCKIP Part mbB
(86) International application number: PCT/KR2024/018885
(87) International publication number: WO 2025/192823

(57) **Abstract**

Provided are a battery module including a first battery cell; a second battery cell disposed to face and contact the first battery cell; and a graphite sheet provided between the first battery cell and the second battery cell, opposing side surfaces of the graphite sheet respectively being in surface contact with side surfaces of the first battery cell and the second battery cell facing each other, and a battery pack and a vehicle including the battery module.

## Description

### TECHNICAL FIELD

The present disclosure relates to a battery module in which deterioration of a battery cell is prevented and performance is increased by resolving thermal imbalance in a battery cell and achieving thermal balancing and the safety of the battery cell is increased by preventing heat concentration on a specific region, a battery pack and a vehicle including the same.

### BACKGROUND

Recently, technologies for reducing carbon have been actively developed to address environmental problems, such as abnormal temperatures. In order to reduce carbon, energy is to be produced in an eco-friendly way rather than using fossil fuels, the produced energy is to be stored in the form of electric energy, and the stored electric energy is to be used in vehicles, various industrial sites, and homes.

In order to utilize electric energy for reducing carbon, the use of batteries to and from which electric energy is stored and drawn out is essential. Therefore, securing battery performance is essential to sufficiently store electric energy and use the electric energy without inconvenience.

Batteries mainly use a reduction-oxidation reaction of metal ions, and metal ions are used with high density to increase the capacity, charge/discharge performance, and efficiency of batteries, and research has been actively conducted on materials that make up electrolytes and solid electrolytes. However, in general, as the performance of batteries develops, there is a problem that stability decreases.

Batteries used in vehicles, industries, and homes are manufactured in physical units called packs. A battery pack has a plurality of battery cells embedded inside a battery case and seals the same to prevent fire from spreading to the outside in the event of an accident, such as battery thermal runaway, and protects the internal battery cells from being deteriorated by the influence of an external environment or damaged due to physical reasons.

In a battery pack, a number of battery cells are installed in an intermediate form of a module or an assembly (cell module assembly (CMA)). In the case of a battery module or assembly, a number of battery cells are assembled into a single module or assembly, and a number of modules are fastened inside a pack case, thereby completing a battery pack. When servicing the battery, maintenance is performed in units of these modules or assemblies, thereby facilitating maintenance.

A number of unit battery cells that make up a module or assembly includes a positive electrode, a negative electrode, and an electrolyte. Since battery cells generate heat during charging and discharging, effective heat dissipation for the battery cells is required. In addition, from the perspective of the battery module, assembly, or battery pack, a design for efficient heat dissipation is necessary to prevent safety accidents.

Meanwhile, batteries may deteriorate due to manufacturing errors, excessive charging and discharging, and aging. In addition, if battery deterioration continues, a fire may eventually occur. Therefore, it is necessary to prepare in advance to prevent a fire from occurring in the battery.

To this end, the battery requires cooling of the battery module or assembly through a cooling system, and temperature balancing has to be performed overall from the standpoint of the battery cells constituting the module or assembly.

The contents described as the related art have been provided only to assist in understanding the background of the present disclosure and should not be considered as corresponding to the related art known to those having ordinary skill in the art.

### SUMMARY

According to an embodiment of the present disclosure, the present disclosure provides a battery module capable of improving the performance and safety of a battery cell by performing thermal balancing of the battery cell, and a battery pack and a vehicle including the same.

The technical problems to be addressed in the present disclosure are not limited to the technical problems mentioned above, and other technical problems not mentioned may be clearly understood by a person having ordinary knowledge in the technical field to which the present disclosure pertains from the description below.

Among embodiments, a battery module comprises: a first battery cell; a second battery cell facing and contacting the first battery cell; and a graphite sheet between the first battery cell and the second battery cell, wherein opposing side surfaces of the graphite sheet are respectively in surface contact with side surfaces of the first battery cell and the second battery cell facing each other.

The graphite sheet may be bonded and fixed to the side surface of one of the first battery cell or the second battery cell and may be in surface contact with the side surface of the other battery cell during assembly.

Graphite sheets may be bonded and fixed to both opposing side surfaces of the first battery cell, and second battery cells may be assembled to be in close contact with opposing side surfaces of the first battery cell, respectively.

A compression pad may be between a plurality of adjacent first battery cells or between a plurality of adjacent second battery cells.

The graphite sheet may be on opposing side surfaces of the compression pad, and the graphite sheet may be in close contact with the compression pad and the battery cell.

An end portion of the graphite sheet may bend to one side and wrap an end surface of the first battery cell or the second battery cell.

The bent end portion of the graphite sheet may contact a cooling portion.

A thermally conductive resin may be between the bent end portion of the graphite sheet and the cooling portion.

A through-hole may be in the bent end portion of the graphite sheet, and the thermally conductive resin may contact an end surface of the first battery cell or the second battery cell through the through-hole.

A second battery cell may be on each of opposing sides of the first battery cell, and the graphite sheet may be bent a plurality of times and wrap opposing side surfaces and an end surface of the first battery cell together.

A graphite sheet may be between a pair of adjacent second battery cells.

The second battery cell and a compression pad may be on opposing sides of the first battery cell, and the graphite sheet may be bent a plurality of times and wrap opposing side surfaces and an end surface of the first battery cell together.

A pair of first battery cells may be between a pair of compression pads, a pair of second battery cells may be adjacent to each other between the pair of first battery cells, and the graphite sheet may be bent a plurality of times and wrap opposing side surfaces and an end surface of each first battery cell together.

The graphite sheet may be between the pair of adjacent second battery cells.

A pair of first battery cells may be between a pair of compression pads, a second battery cell may be between the pair of first battery cells, and the graphite sheet may be bent a plurality of times to wrap opposing side surfaces and an end surface of the second battery cell together.

A graphite sheet may be between the compression pad and the first battery cell.

The first battery cell and the second battery cell may be adjacent to each other between a pair of compression pads, the graphite sheet may be between the first battery cell and the second battery cell, and an end portion of the graphite sheet may be bent to one side and wrap an end surface of the first battery cell or the second battery cell.

A graphite sheet may be between the compression pad and the first or second battery cell.

A heat-resistant layer of a heat-resistant material may be attached to one side surface of the graphite sheet.

A compression pad may be between a plurality of adjacent first battery cells or between a plurality of adjacent second battery cells, and a heat-resistant layer comprising a heat-resistant material may be inside the compression pad.

Among embodiments, a battery pack and a vehicle comprise the battery module described above.

According to the battery module of the present disclosure and the battery pack and the vehicle including the same, in the battery cells included in a module or assembly, self-thermal balancing may be performed, thereby increasing the efficiency of the overall thermal management and improving the performance and stability.

In addition, since thermal balancing may be performed in one battery cell, the efficiency of the overall thermal management may be increased and the performance and stability may be significantly improved while using the existing cooling system as it is.

In addition, by effectively using a graphite sheet required for performing thermal balancing of each battery cell, the manufacturing cost may be reduced and the working man/hour (M/H) may be significantly reduced.

The effects obtained from the present disclosure are not limited to the effects mentioned above, and other effects not mentioned may be clearly understood by those skilled in the art to which the present disclosure pertains from the description below.

### BRIEF DESCRIPTION OF THE DRAWINGS

FIG. 1 is a perspective view of a battery module according to an embodiment of the present disclosure.
FIG. 2 is a diagram illustrating a state in which a graphite sheet is attached to a battery cell of a battery module according to an embodiment of the present disclosure.
FIG. 3 is a planar view of a graphite sheet of a battery module according to an embodiment of the present disclosure.
FIG. 4 is a view illustrating a state in which a graphite sheet is attached to a compression pad of a battery module according to an embodiment of the present disclosure.
FIGS. 5 to 7 are views illustrating battery modules according to various embodiments of the present disclosure.
FIG. 8 is a view illustrating a battery pack and a vehicle including a battery module according to an embodiment of the present disclosure.

### DETAILED DESCRIPTION

In describing the present disclosure, if a detailed explanation for a related known function or construction is considered to unnecessarily divert the gist of the present disclosure, such explanation has been omitted but would be understood by those skilled in the art. The accompanying drawings of the present disclosure aim to facilitate understanding of the present disclosure and should not be construed as limited to the accompanying drawings. Also, the present disclosure is not limited to a specific disclosed form, but includes all modifications, equivalents, and substitutions without departing from the scope and spirit of the present disclosure.

It will be understood that, although the terms first, second, etc. may be used herein to describe various elements, these elements should not be limited by these terms. These terms are only used to distinguish one element from another.

As used herein, the singular forms "a", "an" and "the" are intended to include the plural forms as well, unless the context clearly indicates otherwise.

It will be further understood that the terms "comprises" "comprising," "includes" and/or "including" when used herein, specify the presence of stated features, integers, steps, operations, elements, and/or components, but do not preclude the presence or addition of one or more other features, steps, operations, elements, components, and/or groups thereof.

In the following description, usage of suffixes, such as 'module', 'part' or 'unit' used for referring to elements is given merely to facilitate explanation of the present disclosure, without having any significant meaning by itself.

When it is mentioned that a certain element is "connected to" or "electrically connected to" a second element, the first element may be directly connected or electrically connected to the second element, but it should be understood that a third element may intervene therebetween. Meanwhile, when it is mentioned that a certain element is "directly connected to" or "directly electrically connected to" a second element, it should be understood that there is no third element therebetween.

Hereinafter, embodiments disclosed in this specification will be described in detail with reference to the accompanying drawings. Regardless of the reference numerals, like components are given like reference numerals and redundant descriptions thereof will be omitted.

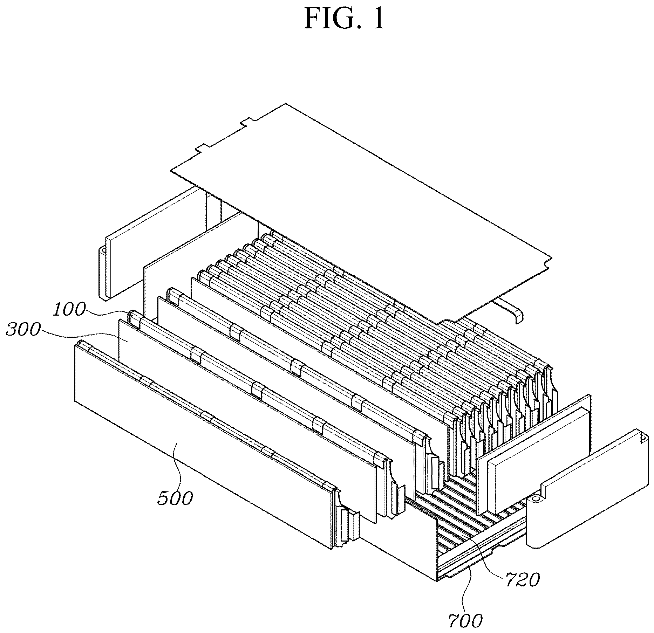

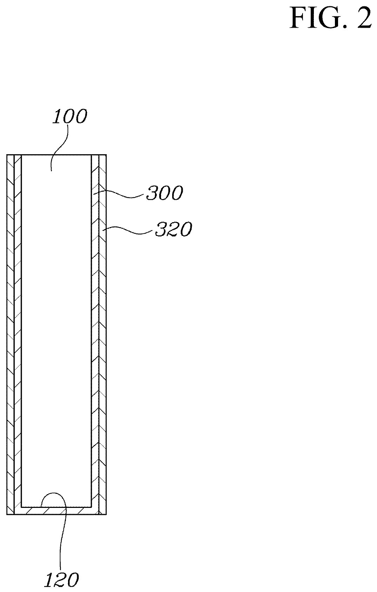

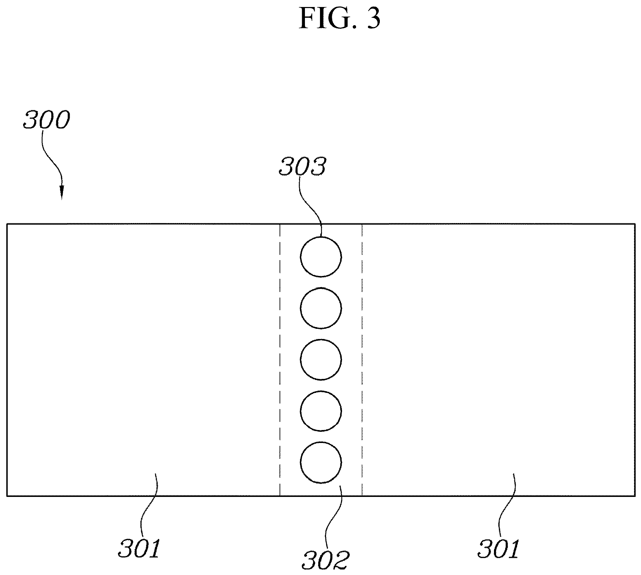

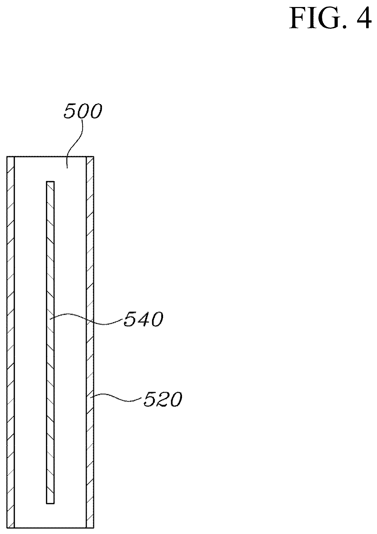

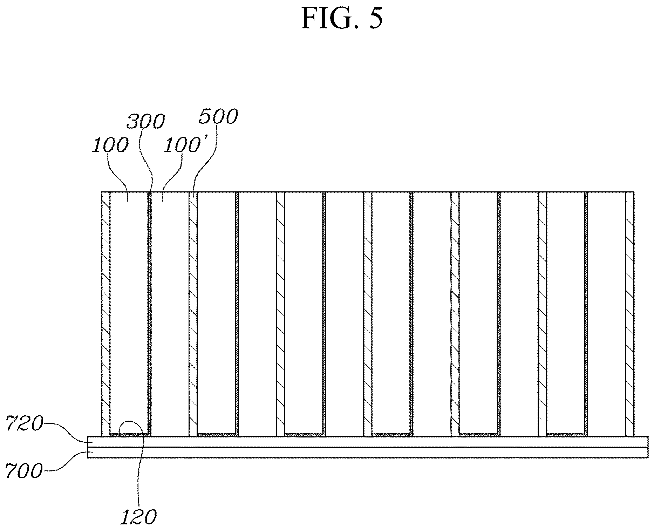

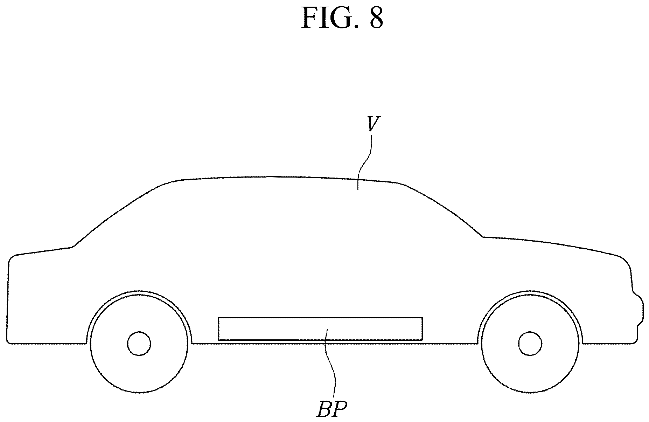

FIG. 1 is a perspective view of a battery module according to an embodiment of the present disclosure, FIG. 2 is a diagram illustrating a state in which a graphite sheet is attached to a battery cell of a battery module according to an embodiment of the present disclosure, FIG. 3 is a planar view of a graphite sheet of a battery module according to an embodiment of the present disclosure, FIG. 4 is a view illustrating a state in which a graphite sheet is attached to a compression pad of a battery module according to an embodiment of the present disclosure, FIGS. 5 to 7 are views illustrating battery modules according to various embodiments of the present disclosure, and FIG. 8 is a view illustrating a battery pack and a vehicle including a battery module according to an embodiment of the present disclosure.

The temperature of a battery cell rises during charging and discharging, and such a temperature rise causes a decrease in the performance and lifespan of the battery itself. Therefore, a cooling structure is required to constantly maintain the battery cell below a certain temperature. One of such structures is a bottom cooling structure in which coolant flows inside a battery pack to cool the bottom of a battery module. However, this cooling method causes a temperature difference between lower and upper portions of the battery cell, which reduces the efficiency of battery use. To improve this, it is necessary to cool the overall temperature of the battery cell evenly. In other words, thermal balancing is required not only in the battery module but also in the battery cell itself.

The present disclosure is to effectively balance the temperature of the battery cell by reducing the temperature difference by location (top-bottom, side-center) of the battery cell in a battery module, assembly, or stack structure, thereby improving the rapid charging performance and life performance.

In order to solve the problem of temperature differences by location even in a single battery cell, a thin film-type thermally conductive material is added between the battery cells in the structure of a stack, assembly, or module in which a plurality of battery cells are combined, so that the temperature difference in a planar direction of the battery cell may be reduced.

Battery cells may be classified into prismatic, cylindrical, or pouch-type batteries formed of cans. Various packaging materials of these battery cells are mainly formed of aluminum. A thin-film graphite sheet that is lightweight and slim and has excellent thermal conductivity, etc. while having superior thermal conductivity compared to aluminum is applied to the packaging material of these battery cells. The graphite sheet may be applied in various manners, and additionally, a heat-resistant barrier may be added inside the compression pad to suppress thermal propagation between adjacent battery cells.

Specifically, in the battery module according to the present disclosure, a plurality of battery cells may be stacked to form a stack, assembly, or module as shown in FIG. 1. In the present disclosure, the assembly of these battery cells is collectively referred to as a battery module. In the present disclosure, the assembly of these battery cells is referred to as a battery module, but this includes all cases in which a plurality of battery cells are assembled, such as a battery stack or assembly.

As shown in FIG. 1, the battery module is configured by stacking a plurality of battery cells 100, and a compression pad 500 is inserted into some sections. In addition, a graphite sheet 300 is provided on the side of each battery cell 100. Also, a thermally conductive resin (thermal resin) 720 is provided at the bottom for heat conduction with a cooling portion.

The cooling portion 700 may be implemented in various manners, but a representative example is a cooling channel in which a coolant flows. Since the cooling portion 700 and the battery cell 100 or graphite sheet 300 are in surface contact, the thermally conductive resin 720 is filled in between to increase the conductivity.

The battery module of the present disclosure includes: a first battery cell 100; a second battery cell 100' disposed to face and contact the first battery cell 100; and a graphite sheet 300 provided between the first battery cell 100 and the second battery cell 100' and having opposing side surfaces in surface contact with side surfaces of the first battery cell 100 and the second battery cell 100' facing each other.

The battery module of the present disclosure includes a plurality of battery cells stacked in series, and each battery cell is defined as a first battery cell and a second battery cell to be distinguished. The first battery cell 100 and the second battery cell 100' are arranged so that the sides surfaces thereof face each other and are assembled so that they are adhered by pressure. Also, the graphite sheet 300 is provided therebetween.

Since the graphite sheet 300 is used in an environment of -40 degrees Celsius to +400 degrees Celsius, the graphite sheet 300 has very high heat resistance. Also, the graphite sheet 300 has excellent thermal conductivity in the planar direction compared to metals, such as aluminum. Therefore, when a graphite sheet is applied between adjacent battery cells, thermal balancing in the cell unit is possible in one battery cell through high heat conductivity in the planar direction.

Of course, since a packaging material of the battery cell includes aluminum, it has basic heat conductivity characteristics, but aluminum does not have sufficient heat conductivity in the planar direction, so it shows a high temperature at a point separated from an electrode area or the cooling portion.

However, in the case of a graphite sheet, it may be formed thinner than aluminum and may improve heat conduction in a width direction rather than a thickness direction depending on the arrangement of carbon therein, so the graphite sheet is very effective for thermal balancing in the cell unit.

In the case of the present disclosure, the graphite sheet 300 is surface-contacted between adjacent first battery cells 100 and second battery cells 100', thermal balancing in the planar direction in each battery cell effectively occurs. Also, since the graphite sheet 300 exists between two battery cells, overheating in a specific portion of some battery cells may easily spread to the entire area of the adjacent battery cells, so that not only the battery cell but also the battery module has high thermal balancing performance.

As shown in FIG. 5, the graphite sheet 300 is fixed to be bonded to the side surface of one of the first battery cell 100 or the second battery cell 100' and may be in surface contact with the side surface of the remaining battery cell during assembly. That is, if the graphite sheet 300 is applied to the side surfaces of all the battery cells constituting the battery module, the cost increases, the weight increases, and the working M/H is also excessively required. Therefore, the graphite sheet may be applied only to essential locations, thereby increasing the efficiency. To this end, at a point at which two battery cells face each other and come into contact, the graphite sheet is attached only to one side of the battery cell. Then, the two battery cells are assembled so that they come into contact with each other. Through this, two battery cells may share one graphite sheet, thereby reducing the number of applied graphite sheets. In addition, since the battery cells are mutually pressed when assembled, thermal balancing of each battery cell placed on both sides is possible through one graphite sheet and mutual thermal balancing is also possible between adjacent battery cells. In addition, since the graphite sheet is attached to the surface of one battery cell in advance before assembly, manufacturing management is easy and errors during assembly are reduced.

In addition, in this case, the graphite sheet 300 may be bent to one side to wrap an end surface of the first battery cell or the second battery cell. That is, the graphite sheet is attached to cover one side surface of the battery cell, and a lower end portion thereof is bent 90 degrees to cover a lower end portion 120 of the corresponding battery cell. In this case, the graphite sheet 300 at the lower end portion contacts the cooling portion 700 below. That is, the bent end portion of the graphite sheet may contact the cooling portion. Accordingly, the graphite sheet, while performing thermal balancing in the planar direction of the battery cell, simultaneously performs heat dissipation promptly to the cooling portion below, thereby improving the overall cooling performance.

In particular, a thermally conductive resin 720 may be provided between a bent end portion 302 of the graphite sheet 300 and the cooling portion 700, a through-hole 303 is formed in the bent end portion 302 of the graphite sheet 300, and the thermally conductive resin 720 may contact the end surface 120 or 120' of the first battery cell 100 or the second battery cell 100' through the through-hole 303.

That is, by applying a thermally conductive resin (thermal resin, etc.) between the bent end portion 302 of the graphite sheet 300 and the cooling portion 700, the efficiency of heat conduction may be increased, and in this process, when a plurality of through-holes 303 are formed in the bent end portion 302 of the graphite sheet 300 as shown in FIG. 3, the thermally conductive resin 720 is filled through the through-holes 303, thereby further strengthening the adhesion between the end portion 302 of the graphite sheet 300 and the battery cell 100 and increasing the efficiency of heat conduction among the battery cell 100 - the graphite sheet 300 - the cooling portion 700.

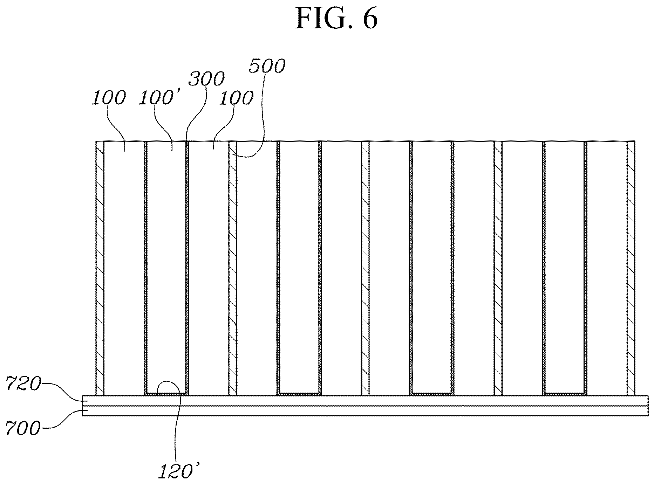

Meanwhile, as in the case of FIG. 6, a pair of first battery cells 100 may be provided between a pair of compression pads 500, and a second battery cell 100' may be provided between the first battery cells 100. In this case, graphite sheets 300 are respectively bonded and fixed to opposing side surfaces of the second battery cell 100' located in the center, and the first battery cells 100 may be assembled to be in close contact with opposing side surfaces of the second battery cell 100'. In this case, three battery cells are gathered to form a stack, and in this case, the graphite sheets 300 are respectively attached to opposing side surfaces of the second battery cell 100' located in the center. Also, when the second battery cell 100' with the graphite sheet 300 attached thereto is positioned between the first battery cells 100 on opposing sides, the three battery cells may be heat-balanced simultaneously through only one assembly process.

Also, in this case, the graphite sheet 300 is bent a plurality of times to wrap opposing side surfaces and the end surface 120' of the second battery cell 100', thereby improving the heat dissipation performance through the cooling portion 700 therebelow. Also, in this case, as a result, it may be achieved by manufacturing and attaching the graphite sheet 300 as shown in FIG. 3. That is, as shown in FIG. 3, the graphite sheet includes two side surfaces 301 and a bottom surface 302, and a plurality of through-holes 303 are formed in the bottom surface 302, thereby wrapping opposing side surfaces and the bottom surface of the battery cell together, as shown in FIG. 6, and also performing heat dissipation through the lower end, thereby further accelerating thermal balancing on the side surfaces.

In particular, in the case of FIG. 6, since one graphite sheet has to balance two battery cells on both sides, sufficient balancing performance may be secured by adding heat dissipation.

In addition, as illustrated, the compression pad 500 may be provided between a plurality of adjacent first battery cells or between a plurality of adjacent second battery cells. Accordingly, in this case, by adding graphite sheets to opposing side surfaces of the compression pad 500 and bringing the graphite sheets in close contact with the compression pad and the battery cell, it is also possible to perform thermal balancing on opposing sides of the battery cell simultaneously.

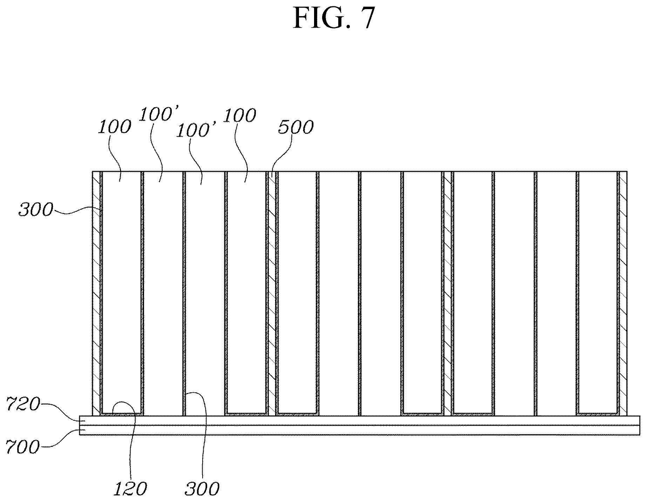

Alternatively, as shown in FIG. 7, a pair of first battery cells 100 are provided between a pair of compression pads 500 and a pair of second battery cells 100' are provided adjacent to each other between a pair of first battery cells 100, and the graphite sheet 300 may be bent a plurality of times to wrap opposing side surfaces and the end surface 120 of each of the first battery cells 100. In this case, four battery cells are mounted between the compression pads 500. In this case, a pair of first battery cells 100 are provided between a pair of compression pads 500, and a pair of second battery cells 100' are provided adjacent to each other between a pair of first battery cells 100.

And the graphite sheet 300 is bent a plurality of times to wrap the first battery cells 100 spaced apart from each other. Also, an additional graphite sheet 300 may be provided between a pair of adjacent second battery cells 100'. Through this, the graphite sheet exists on the side surfaces of each of the battery cells, and each of the battery cells may sufficiently heat-balanced. In addition, some of the graphite sheets contact the cooling portion 700 therebelow and perform heat dissipation, so that even if a large number of battery cells are stacked, balancing and heat dissipation may be performed without difficulty.

Meanwhile, as shown in FIG. 2, the graphite sheet 300 may be bonded to wrap opposing side surfaces and the lower surface of the battery cell at the same time, and a heat-resistant layer 320 formed of a heat-resistant material may be attached to opposing outer surfaces. The heat-resistant layer may be formed with metal or mica to perform insulation. Through this, thermal balancing of the corresponding battery cell is performed, and at the same time, thermal propagation to the adjacent battery cell is prevented.

In addition, in the case of the compression pad 500, as shown in FIG. 4, by attaching the graphite sheets 300 to opposing side surfaces and containing a heat-resistant layer 540 therein, it is possible to perform thermal balancing of the adjacent battery cell, while blocking thermal propagation from one side to the other. The compression pad in this shape may be applied to all of the embodiments of FIGS. 5 to 7.

In the case of the present disclosure, thermal balancing may be effectively performed in the cell unit by attaching and assembling graphite sheets to the side surfaces of the battery cell or the compression pad. In addition, since the graphite sheet is bent to contact the cooling portion therebelow, heat dissipation is also improved, and since it is fixed to the thermally conductive resin through the through-hole, fixing power and heat dissipation are improved.

In addition, since one graphite sheet is bent twice to cover opposing side surfaces and the lower surface of one battery cell at the same time, the assembly is excellent, and since the compression pad also has a heat-resistant layer together with the graphite sheet, thermal balancing of the battery cell may be improved, while thermal propagation is prevented.

Although the present disclosure has been described above with reference to embodiments, it will understood by those skilled in the art that various modifications and changes may be made to the present disclosure without departing from the idea and scope of the present disclosure as set forth in the following claims.

## Claims

1. A battery module comprising:
a first battery cell;
a second battery cell facing and contacting the first battery cell; and
a graphite sheet between the first battery cell and the second battery cell, wherein opposing side surfaces of the graphite sheet are respectively in surface contact with side surfaces of the first battery cell and the second battery cell facing each other.

2. The battery module of claim 1, wherein the graphite sheet bonds and fixes to the side surface of one of the first battery cell or the second battery cell and is in surface contact with the side surface of the other battery cell during assembly.

3. The battery module of claim 1, wherein a respective graphite sheet bonds and fixes to both opposing side surfaces of the first battery cell, and a respective second battery cell is assembled to be in close contact with both opposing side surfaces of the first battery cell, respectively.

4. The battery module of claim 1, wherein a compression pad is between a plurality of adjacent first battery cells or between a plurality of adjacent second battery cells.

5. The battery module of claim 4, wherein the graphite sheet is provided on opposing side surfaces of the compression pad, and the graphite sheet is in close contact with the compression pad and the battery cell.

6. The battery module of claim 1, wherein an end portion of the graphite sheet bends to one side and wraps an end surface of the first battery cell or the second battery cell.

7. The battery module of claim 6, wherein the bent end portion of the graphite sheet contacts a cooling portion.

8. The battery module of claim 5, wherein a thermally conductive resin is between the bent end portion of the graphite sheet and a cooling portion.

9. The battery module of claim 8, wherein a through-hole is in the bent end portion of the graphite sheet, and the thermally conductive resin contacts an end surface of the first battery cell or the second battery cell through the through-hole.

10. The battery module of claim 1, wherein a second battery cell is on each of opposing sides of the first battery cell, and the graphite sheet bends a plurality of times and wraps opposing side surfaces and an end surface of the first battery cell together.

11. The battery module of claim 10, wherein a graphite sheet is provided between a pair of adjacent second battery cells.

12. The battery module of claim 1, wherein the second battery cell and a compression pad are on opposing sides of the first battery cell, and the graphite sheet bends a plurality of times and wraps opposing side surfaces and an end surface of the first battery cell together.

13. The battery module of claim 1, wherein a pair of first battery cells are between a pair of compression pads, a pair of second battery cells are adjacent to each other between the pair of first battery cells, and the graphite sheet bends a plurality of times and wraps opposing side surfaces and an end surface of each of the first battery cell together.

14. The battery module of claim 13, wherein the graphite sheet is provided between the pair of adjacent second battery cells.

15. The battery module of claim 1, wherein a pair of first battery cells are between a pair of compression pads, the second battery cell is between the pair of first battery cells, and the graphite sheet bends a plurality of times and wraps opposing side surfaces and an end surface of the second battery cell together.

16. The battery module of claim 15, wherein a graphite sheet is provided between the compression pad and the first battery cell.

17. The battery module of claim 1, wherein the first battery cell and the second battery cell are adjacent to each other between a pair of compression pads, the graphite sheet is between the first battery cell and the second battery cell, and an end portion of the graphite sheet bends to one side and wraps an end surface of the first battery cell or the second battery cell.

18. The battery module of claim 17, wherein a graphite sheet is provided between the compression pad and the first or second battery cell.

19. The battery module of claim 1, wherein a heat-resistant layer of a heat-resistant material is attached to one side surface of the graphite sheet.

20. The battery module of claim 1, wherein a compression pad is between a plurality of the first battery cells adjacent to each other or between a plurality of the second battery cells adjacent to each other, and a heat-resistant layer of a heat-resistant material is inside the compression pad.

21. A battery pack comprising the battery module of claim 1.

22. A vehicle comprising the battery module of claim 1.
